# EUROPEAN PATENT APPLICATION

(11) **EP 3 484 241 A1**
(43) Date of publication of application: **15.05.2019**
(21) Application number: 17201235.3
(22) Date of filing: 13.11.2017
(51) Int. Cl.: H05B 3/68, H05B 6/06, H05B 6/12

(54) **COOKING HOB**

(71) Applicant: ELECTROLUX APPLIANCES AKTIEBOLAG, 105 45 Stockholm (SE)
(72) Inventor: LUCKHARDT, Christoph, 91541 Rothenburg ob der Tauber (DE); HÄUTLE, Ulrich, 91541 Rothenburg ob der Tauber (DE); SCHIEBER, Ulrich, 91541 Rothenburg ob der Tauber (DE)
(74) Representative: Electrolux Group Patents

(57) **Abstract**

The present invention relates to a cooking hob (10), in particular an induction cooking hob (10). The cooking hob (10) comprises at least one heating power transferring element (12), preferably an induction coil (12). The cooking hob (10) comprises at least one magnetic element (12; 18) associated with a cooking zone formed by one or more heating power transferring elements (12). The magnetic element (12; 18) is adapted for generating an attractive force (F) on the bottom of the cookware item (16).

## Description

The present invention relates to a cooking hob. In particular, the present invention relates to an induction cooking hob, preferably for a domestic appliance.

In an induction cooking hob alternating electric currents pass through one or more induction coils, so that oscillating magnetic fields are generated upon the cooking hob. The bottom of a cookware item is made of ferromagnetic material. In the bottom of the cookware item eddy currents are generated by the oscillating magnetic fields, so that the bottom of the cookware item is heated up.

However, the reliable function of the induction cooking hob requires that the cookware item is precisely placed upon one or more induction coils.

It is an object of the present invention to provide a cooking hob, which allows a precise positioning of the cookware item upon one or more induction coils.

The object is achieved by the cooking hob according to claim 1.

According to the present invention a cooking hob, in particular an induction cooking hob, is provided, wherein:
- the cooking hob comprises at least one heating power transferring element, preferably an induction coil,
- the cooking hob comprises at least one magnetic element associated with a cooking zone formed by one or more heating power transferring elements, and
- the at least one magnetic element is adapted for generating an attractive force on the bottom of the cookware item.

The core of the present invention is the magnetic element generating the attractive force on the bottom of the cookware item, when the cookware item is placed on a cooking surface of the cooking hob. The user feels the attractive force and is able to position the cookware item in the preferred position. The attractive force is sufficient for a haptic assistance of positioning the cookware item. In other words, the user feels that the magnetic element pulls the cookware item to the preferred position. For example, the closer the cookware item is spaced from the preferred position, the stronger is the required force for moving said cookware item by the user.

Preferably, at least one magnetic element is arranged in such a way that the attractive force on the bottom of the cookware item exhibits the strongest magnetic field strength in an optimal cooking position for said cookware item. The optimal cooking position as used herein is preferably understood as that position of the cookware item relative to the cooking zone with one or more heating power transferring elements, in which the amount, in particular the power, of energy transfer from the heating power transferring elements to the cooking zone is maximum. In the simplest example, wherein the cooking zone includes one heating power transferring element, the cookware item is placed centrally above said heating power transferring element.

In particular, the at least one magnetic element is arranged within or besides the heating power transferring element. Preferably, an ensemble of magnetic elements is arranged within and/or besides the heating power transferring element according to a symmetric pattern. In the latter case, the attractive force is generated by several magnetic elements.

For example, the magnetic element is an electromagnetic element formed by a separate coil, wherein a direct current passes through said coil. Said at least one separate coil may be activated dependent on the cooking zone formed by one or more heating power transferring elements, which are bridged to said cooking zone.

In particular, the electromagnetic element is pulsed by a direct current passing through said coil.

Furthermore, the magnetic element may be formed by a permanent magnet. In this case, no control unit and no power supply is required.

Alternatively, the magnetic element may be formed by the induction coil, wherein a direct current passes through said induction coil. In this case, no additional electromagnetic and magnetic elements are required. The induction coil may be used as heating power transferring element during the cooking process and as positioning element before said cooking process. This alternative embodiment is realisable by low complexity.

Furthermore, the electromagnetic element is automatically and/or manually activatable and deactivatable. Thus, the electromagnetic element may be turned on and off by a control unit of the cooking hob or by the user.

Further, the cooking zone is formed by at least two, preferably more than three, more preferably more than four heating power transferring elements, wherein less than ten, preferably less than seven, more preferably less than five magnetic elements are associated with each heating power transferring element.

Additionally, the cooking hob may comprise a plurality of heating power transferring elements, wherein two or more adjacent heating power transferring elements form the cooking zone, and wherein at least one magnetic element is arranged within and/or besides of each heating power transferring element.

According to a further embodiment, the induction cooking hob comprises a plurality of heating power transferring elements adapted for a flexible cooking zone, wherein at least one magnetic element is activatable depending on said flexible cooking zone. Adjacent heating power transferring elements are connected to form said flexible cooking zone. The shape and the size of the cooking zone are adaptable to the shape and size of the cooking item. The heating power transferring elements may be supplied by one or more power circuits. Said power circuits maybe controlled according to a predetermined scheme, e.g. one phase for each power circuit.

Preferably, the cooking hob comprises at least one positioning mode, wherein at least one induction coil or magnetic element, respectively, generates the attractive force on the bottom of the cookware item, so that the cookware item is drawn to the preferred position for said cookware item, while any heating functions are deactivated.

The positioning mode may be automatically or manually activated.

Moreover, the cooking hob comprises at least one pot detection device for recognising the position of the cookware item on the cooking hob, wherein preferably the positioning mode is activated by said pot detection device.

On the one hand, the attractive force may be at least 25 N, preferably 50 N, more preferably 75 N and even more preferably 100 N. On the other hand, the attractive force may be less than 500 N, preferably less than 250 N.

Novel and inventive features of the present invention are set forth in the appended claims.

The present invention will be described in further detail with reference to the drawing, in which
- FIG 1: illustrates a schematic sectional side view of an induction cooking hob according to a first embodiment of the present invention,
- FIG 2: illustrates a schematic top view of an induction cooking hob according to a second embodiment of the present invention, and
- FIG 3: illustrates a schematic top view of a section of the induction cooking hob according to a third embodiment of the present invention.

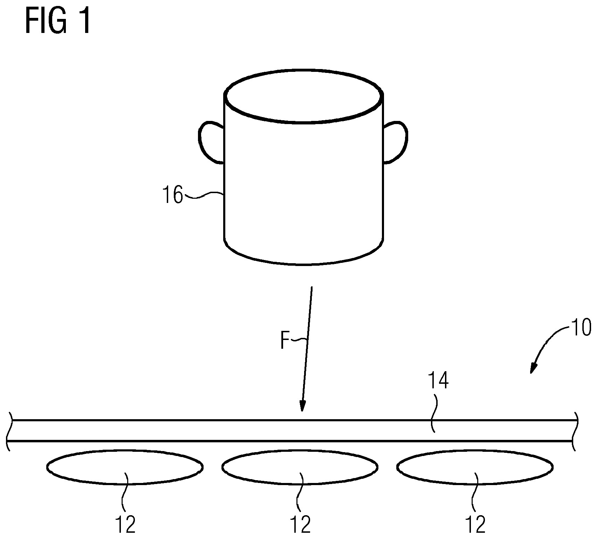

FIG 1 illustrates a schematic sectional side view of an induction cooking 10 hob according to a first embodiment of the present invention.

The induction cooking hob 10 comprises a number of induction coils 12. The induction coils 12 are arranged beneath a panel 14. For example, said panel 14 is a glass ceramic panel. A cookware item 16 is held above the induction cooking hob 10. At least the bottom of the cookware item 16 is made of a ferromagnetic material.

In a cooking mode alternating electric currents pass through the one or more induction coils 12, on which the cookware item 16 is placed. The cookware item 16 may be an arbitrary cooking utensil, in particular a cooking pot, cooking vessel or pan. By this way, oscillating magnetic fields are generated upon the induction cooking hob 10. In the bottom of the cookware item 16 eddy currents are generated by the oscillating magnetic fields, so that the bottom of the cookware item 16 is heated up.

In a positioning mode a direct current passes through the induction coil 12, on which the cookware item 16 should be placed.

Said direct current generates a static magnetic field above the induction coil 12. In FIG 1 the direct current passes through the central induction coil 12, so that an attractive force F acts between the cookware item 16 and said central induction coil 12. The user holding the cookware item 16 above the induction cooking hob 10 feels said attractive force F and is able to place the cookware item 16 in the correct position on the induction cooking hob 10. In the correct position, the cookware item 16 is centred upon the corresponding induction coil 12. In this example, the cookware item 16 and the corresponding induction coil 12 have about the same base areas.

The user positioning the cookware item 16 above the induction cooking hob 10 should feel the attractive force F, if said attractive force F is at least F = 25 N, preferably at least F = 50 N, more preferably at least F = 75 N and even more preferably F = 100 N. The bigger the attractive force F, the better the recognition by the user. However, the glass ceramic panel 14 has a thickness between 3 mm and 5 mm, typically about 4 mm. In order to obtain the attractive force F = 100 N above the glass ceramic panel 14, the retention force beneath the panel 14 must be about 400 N. Said retention force may be provided by a magnetic element having a diameter of about 50 mm and height of about 30 mm.

Further, the attractive force F shall be less than F = 500 N, preferably less than F = 250 N. The cookware item 16 should not be pulled too strongly to the glass ceramic panel 14 in order to avoid a damage of said glass ceramic panel 14.

The positioning mode is automatically or manually activated before the cooking mode. In this embodiment, the induction coil 12 has a double function. On the one hand, the induction coil 12 generates the oscillating magnetic field for heating up the bottom of the cookware item 16 during the cooking mode. On the other hand, the induction coil 12 generates the attractive force F between the cookware item 16 and said induction coil 12.

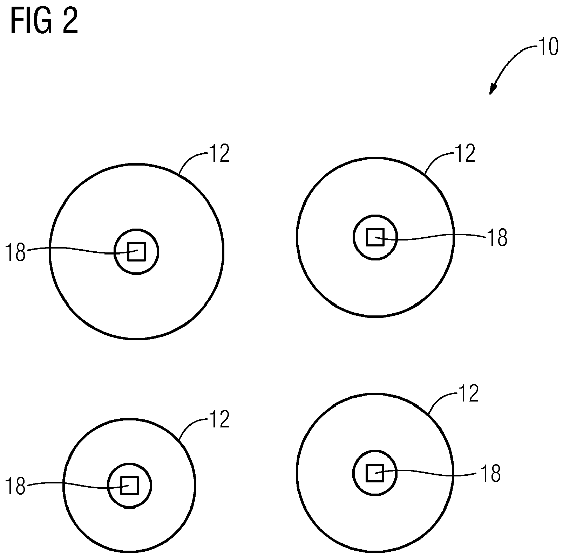

FIG 2 illustrates a schematic top view of an induction cooking hob 10 according to a second embodiment of the present invention.

In this embodiment, the induction cooking hob 10 comprises four induction coils 12. Preferably, each induction coil 12 forms a cooking zone. In this example, one induction coil 12 is large-sized, two induction coils 12 are medium-sized and one induction coil 12 is small-sized. In the centre of each induction coil 12 a magnetic element 18 is arranged. The magnetic element 18 is provided for generating the attractive force F between the cookware item 16 and the corresponding induction coil 12.

For example, the magnetic element 18 is a permanent magnet.

Alternatively, the magnetic element 18 may be an electromagnetic element including a coil activatable by a direct current passing through said coil.

The magnetic element 18 generates a static magnetic field above the corresponding induction coil 12, so that the attractive force F acts between the cookware item 16 and induction coil 12. The user holding the cookware item 16 above the induction coil 12 feels the attractive force F. Thus, the user is able to place the cookware item 16 in the correct position on the induction coil 12. In the correct position, the cookware item 16 is centred upon the corresponding induction coil 12.

For example, the attractive force F may be generated by a pulsed electromagnetic element 18. The closer the cookware item 16 is spaced from the correct position, the stronger is the required force for moving said cookware item 16 by the user.

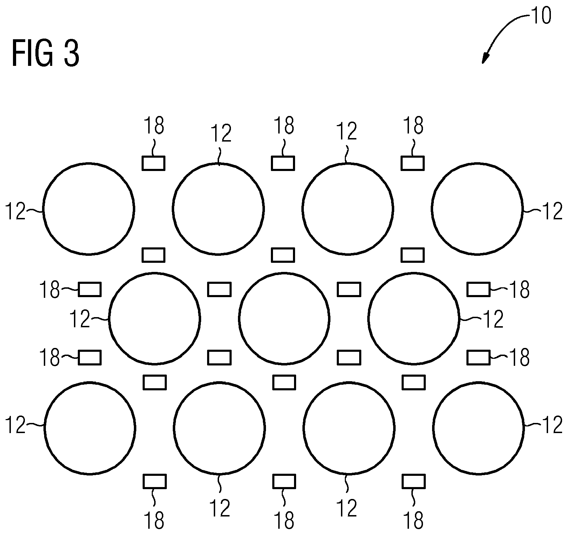

FIG 3 illustrates a schematic top view of a section of the induction cooking hob 10 according to a third embodiment of the present invention.

The cooking hob 10 of the third embodiment comprises a plurality of induction coils 12. Preferably, one cooking zone is formed by two or more adjacent induction coils 12. In particular, the induction coils 12 have the same sizes. Between the induction coils 12 a plurality of magnetic elements 18 is arranged. In this example, six magnetic elements 18 enclose one induction coil 12 in each case.

For example, the magnetic elements 18 are permanent magnets. Alternatively, the magnetic elements 18 are coils activatable by a direct current passing through said coil.

The magnetic elements 18 are provided for generating the attractive force F between the cookware item 16 and the preferred positions of said cookware item 16 on the induction cooking hob 10.

The plurality of magnetic elements 18 allows a more precise positioning of the cooking item 16. For example, if several magnetic elements 18, e.g. three magnetic elements 18, are arranged beside the induction coil 12 and the cooking item 16 covers all said magnetic elements 18, then the cooking item 16 is more precisely centred above said induction coil 12. Moreover, the attractive force F of the plurality of magnetic elements 18 is stronger than the attractive force F of a single magnetic element 18.

The induction cooking hob 10 according to the third embodiment is also suitable for a so-called "everywhere cooking", wherein the user places the cookware item 16 onto the induction cooking hob 10 in an arbitrary position. A pot detection system recognises the position of the cookware item 16 on the induction cooking hob 10, wherein the induction coils 12 covered by the cookware item 16 are activated and form the cooking zone. The magnetic elements 18 generate the attractive force F on the cookware item 16.

Preferably, a plurality of magnetic elements 18 is activated, if two or more adjacent induction coils 12 form the cooking zone. Since the cooking zone is formed in a flexible way, the activated magnetic elements 18 should be flexibly selected depending on said cooking zone. In particular, one magnetic element 18 should be arranged in the centre of the induction coil 12 or the formed cooking coking zone, wherein additionally further magnetic elements 18, preferably two or three further magnetic elements 18, should be arranged around the induction coil 12 or the formed cooking coking zone, respectively. According to preferred embodiment, a matrix of induction coils 12 and a matrix of magnetic elements 18 are formed on the cooking hob 10. Preferably, said matrices are displaced to each other, so that the magnetic elements 18 are arranged beside the induction coils 12.

In particular, the attractive force F may be generated by the pulsed magnetic element 18. The closer the cookware item 16 is spaced from the correct position, the stronger is the required force for moving said cookware item 16 by the user.

According to the present invention the magnetic force supports the positioning of the cookware item 16 on the induction cooking hob 10. When the cookware item 16 is precisely placed upon the one or more induction coils 12, then the efficiency the induction cooking hob 10 is optimised.

Although illustrative embodiments of the present invention have been described herein with reference to the accompanying drawings, it is to be understood that the present invention is not limited to those precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: induction cooking hob
- 12: induction coil
- 14: panel, glass ceramic panel
- 16: cookware item
- 18: magnetic element

- F: attractive force

## Claims

1. A cooking hob (10), in particular an induction cooking hob, wherein:
- the cooking hob (10) comprises at least one heating power transferring element (12), preferably an induction coil (12),
- the cooking hob (10) comprises at least one magnetic element (18) associated with a cooking zone formed by one or more heating power transferring elements (12), and
- the at least one magnetic element (18) is adapted for generating an attractive force (F) on the bottom of the cookware item (16).

2. The cooking hob (10) according to claim 1, **characterised in that** the at least one magnetic element (18) is arranged in such a way that the attractive force (F) on the bottom of the cookware item (16) exhibits the strongest magnetic field strength in an optimal cooking position for said cookware item (16).

3. The induction cooking hob (10) according to claim 1 or 2, **characterised in that** the at least one magnetic element (18) is arranged within or besides the heating power transferring element (12), wherein preferably an ensemble of magnetic elements (18) is arranged within and/or besides the heating power transferring element (12) according to a symmetric pattern.

4. The cooking hob (10) according to any one of the preceding claims, **characterised in that** the magnetic element (18) is an electromagnetic element (18) formed by a separate coil, wherein a direct current passes through said coil.

5. The induction cooking hob (10) according to claim 4, **characterised in that** the electromagnetic element (18) is pulsed by a direct current passing through said coil.

6. The induction cooking hob (10) according to claim 4 or 5, **characterised in that** the electromagnetic element (18) is automatically and/or manually activatable and deactivatable.

7. The cooking hob (10) according to any one of the preceding claims, **characterised in that** the magnetic element (18) is formed by a permanent magnet.

8. The cooking hob (10) according to any one of the preceding claims, **characterised in that** the cooking zone is formed by at least two, preferably more than three, more preferably more than four heating power transferring elements (12), wherein less than ten, preferably less than seven, more preferably less than five magnetic elements (18) are associated with each heating power transferring element (12).

9. The cooking hob (10) according to any one of the preceding claims, **characterised in that** the cooking hob (10) comprises a plurality of heating power transferring elements (12), wherein two or more adjacent heating power transferring elements (12) form the cooking zone, and wherein at least one magnetic element (18) is arranged within and/or besides of each heating power transferring element (12).

10. The induction cooking hob (10) according to any one of the preceding claims, **characterised in that** the induction cooking hob (10) comprises a plurality of heating power transferring elements (12) adapted for a flexible cooking zone, wherein at least one magnetic element (18) is activatable depending on said flexible cooking zone.

11. The cooking hob (10) according to any one of the preceding claims, **characterised in that** the cooking hob (10) comprises at least one positioning mode, wherein at least one magnetic element (18) generates the attractive force (F) on the bottom of the cookware item (16), so that the cookware item (16) is drawn to the preferred position for said cookware item (16), while any heating functions are deactivated.

12. The cooking hob (10) according to claim 11, **characterised in that** the positioning mode is automatically or manually activatable.

13. The cooking hob (10) according to any one of the preceding claims, **characterised in that** the cooking hob (10) comprises at least one pot detection device for recognising the position of the cookware item (16) on the cooking hob (10), wherein preferably the positioning mode is activated by said pot detection device.

14. The cooking hob (10) according to any one of the preceding claims, **characterised in that** the attractive force (F) is at least 25 N, preferably 50 N, more preferably 75 N and even more preferably 100 N.

15. The cooking hob (10) according to any one of the preceding claims, **characterised in that** the attractive force (F) is less than 500 N, preferably less than 250 N.
